(19) Europäisches Patentamt
European Patent Office
Office européen des brevets

(11) **EP 2 382 484 B1**

(12) **FASCICULE DE BREVET EUROPEEN**

(45) Date de publication et mention de la délivrance du brevet:
**22.10.2014 Bulletin 2014/43**

(21) Numéro de dépôt: **10702083.6**

(22) Date de dépôt: **25.01.2010**

(51) Int Cl.:
***G01S 19/30*** *(2010.01)*

(86) Numéro de dépôt international:
**PCT/EP2010/050789**

(87) Numéro de publication internationale:
**WO 2010/084189 (29.07.2010 Gazette 2010/30)**

(54) **DISPOSITIF ET PROCÉDÉ DE POURSUITE D'UN SIGNAL DE RADIONAVIGATION**

VORRICHTUNG UND VERFAHREN ZUR VERFOLGUNG EINES FUNKNAVIGATIONSSIGNALS

DEVICE AND METHOD FOR TRACKING A RADIONAVIGATION SIGNAL

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **26.01.2009 FR 0950464**

(43) Date de publication de la demande:
**02.11.2011 Bulletin 2011/44**

(73) Titulaire: **Centre National d'Etudes Spatiales (C.N.E.S.)**
**75039 Paris Cedex 01 (FR)**

(72) Inventeur: **DE LA TOUR, Antoine**
**31500 Toulouse (FR)**

(74) Mandataire: **Office Freylinger**
**P.O. Box 48**
**8001 Strassen (LU)**

(56) Documents cités:
**WO-A1-2008/090323    FR-A1- 2 853 967**

- DE LATOUR A ET AL: "Subcarrier Tracking Performances of BOC, ALTBOC and MBOC Signals" ION GNSS. INTERNATIONAL TECHNICAL MEETING OF THE SATELLITEDIVISION OF THE INSTITUTE OF NAVIGATION, WASHINGTON, DC, US, 25 septembre 2007 (2007-09-25), pages 769-781, XP007910449 cité dans la demande
- VINCENT HEIRIES ET AL: "Analysis of Non Ambiguous BOC Signal Acquisition Performance" ION GNSS. INTERNATIONAL TECHNICAL MEETING OF THE SATELLITEDIVISION OF THE INSTITUTE OF NAVIGATION, WASHINGTON, DC, US, no. 17TH, 21 septembre 2004 (2004-09-21), pages 2611-2622, XP002471945
- LIN V S ET AL: "Study of the Impact of False Lock Points in Subcarrier Modulated Ranging Signals and Recommended Mitigation Approaches" ION ANNUAL MEETING, XX, XX, 23 juin 2003 (2003-06-23), pages 156-165, XP002338822

EP 2 382 484 B1

## Description

### Domaine technique

La présente invention concerne le domaine de la radionavigation, plus précisément un procédé de poursuite d'un signal de radionavigation (ou signal radioélectrique de navigation) ainsi qu'un dispositif pour mettre en oeuvre un tel procédé. Le champ d'application de l'invention est notamment la réception de signaux de radionavigation émis par des émetteurs d'un système de positionnement par satellite, p. ex. GPS (de l'anglais « Global Positioning System), Galileo, Glonass, QZSS, Compass, IRNSS, etc.

### Etat de la technique

De manière générale, les signaux de radionavigation émis par des satellites (ou pseudolites) d'un système de positionnement se présentent sous la forme d'une porteuse modulée par une forme d'onde d'étalement contenant un code binaire pseudo-aléatoire. La modulation de la porteuse provoquant l'étalement du spectre autour de la fréquence de la porteuse, les signaux de radionavigation sont souvent appelés « en spectre étalé ». Les codes pseudo-aléatoires représentent un identificateur du signal et donc du satellite émetteur. Connus des récepteurs, ils permettent à ceux-ci un Accès Multiple à Répartition de Code (AMRC). Accessoirement, certains signaux de positionnement par satellites peuvent aussi transporter des données utiles (p. ex. le message de navigation) sous forme d'une séquence binaire (à rythme nettement moins élevé que le code pseudo-aléatoire) modulée en plus sur la porteuse. Dans la suite, on fera abstraction de cette charge de données utiles.

Dans le cas de GPS, les signaux de radionavigation sont transmis dans les bandes de fréquences L1, centrée sur 1575,42 MHz et L2, centrée sur 1227,6 MHz. Au cours de la modernisation de GPS, la bande L5, centrée sur 1176,45 MHz sera ajoutée. Les satellites de la constellation Galileo transmettront dans la bandes E2-L1-E1 (la portion de bande médiane L1 étant la même que celle du GPS), E5a (qui, selon la nomenclature Galileo, représente la bande L5 prévue pour le GPS), E5b (centrée sur 1207,14 MHz) et E6 (centrée sur 1278,75 MHz). Notons que les satellites de la constellation Compass transmettent ou transmettront dans la bande B1 (centrée sur 1561,098 MHz), B1-2 (centrée sur 1589,742 MHz), L1 (centrée sur 1575,42 MHz), B2 (centrée sur 1207,14 MHz), et B3 (centrée sur 1268,52 MHz). Les fréquences centrales représentent les fréquences des porteuses des différents signaux.

La réception d'un signal de radionavigation comprend normalement une première démodulation à l'aide d'une réplique interne de la porteuse générée dans le récepteur par un oscillateur piloté par une boucle de poursuite de porteuse et une seconde démodulation à l'aide d'une réplique interne de la forme d'onde d'étalement produite par un générateur de forme d'onde piloté par une boucle de poursuite de forme d'onde d'étalement (appelée aussi « boucle de poursuite de code »). Les signaux d'asservissement des boucles de poursuite de porteuse et de forme d'onde d'étalement sont utilisés par le récepteur pour déterminer sa position. Le signal d'écart de phase entre la porteuse du signal reçu et la réplique interne de porteuse produit à chaque pas de temps par la boucle de poursuite de porteuse fournit une première observable (l'observable de phase). Le signal de décalage temporel entre la forme d'onde d'étalement du signal reçu et la réplique interne de forme d'onde d'étalement produit à chaque pas de temps par la boucle de poursuite de forme d'onde d'étalement représente une deuxième observable (l'observable de code).

Certains signaux de radionavigation utilisent des modulations ayant recours à une forme d'onde d'étalement dans laquelle le code binaire pseudo-aléatoire est multiplié par une séquence binaire ayant un rythme plus élevé que le code. Dans la suite, de telles modulations seront désignées comme « modulations à sous-porteuse ». La séquence binaire à rythme plus élevée sera considérée comme sous-porteuse, ce qui se justifie par le fait que la densité d'énergie spectrale d'un tel signal a deux lobes principaux distants de la fréquence de porteuse d'un écart spectral équivalent à la fréquence centrale (fréquence de sous-porteuse) de la séquence binaire. Des exemples de telles modulations sont les modulations BCS (de l'anglais « Binary Coded Symbol ») et les modulations BOC (de l'anglais « Binary Offset Carrier »), qui représentent en fait des modulations BCS particulières. De manière générale, BOC(n,m) est une fonction du temps t définie par :

$$BOC(n,m)(t) = C_m(t) \cdot sign[\sin(2\pi f_{sc} t)], \qquad \text{(Eq. 1)}$$

où $C_m(t)$ est un code binaire pseudo-aléatoire à rythme de bribes (chip rate) m $\times$ 1,023..Mcps (de l'anglais « mega chips per second », c.-à-d. méga-bribes par seconde) prenant les valeurs +1 ou -1 et $f_{sc}$ la fréquence de sous-porteuse n $\times$ 1,023 MHz. Une condition sur n et m est que le rapport 2n/m soit entier. Dans le cas du service ouvert OS (Open Service) de Galileo, le rythme de bribes est fixé à 1,023 Mcps (méga-chips per second). Notons que lorsqu'on remplace le sinus du côté droit de l'équation 1 par un cosinus, on obtient la fonction BOC en quadrature, notée BOCc :

$$BOCc(n,m)(t) = C_m(t) \cdot sign[\cos(2\pi f_{sc}t)].\qquad \textbf{(Eq. 2)}$$

(De manière générale, on obtient la forme d'onde en quadrature de phase d'une forme d'onde d'étalement BCS en décalant cycliquement la séquence de symboles d'un demi-symbole.)

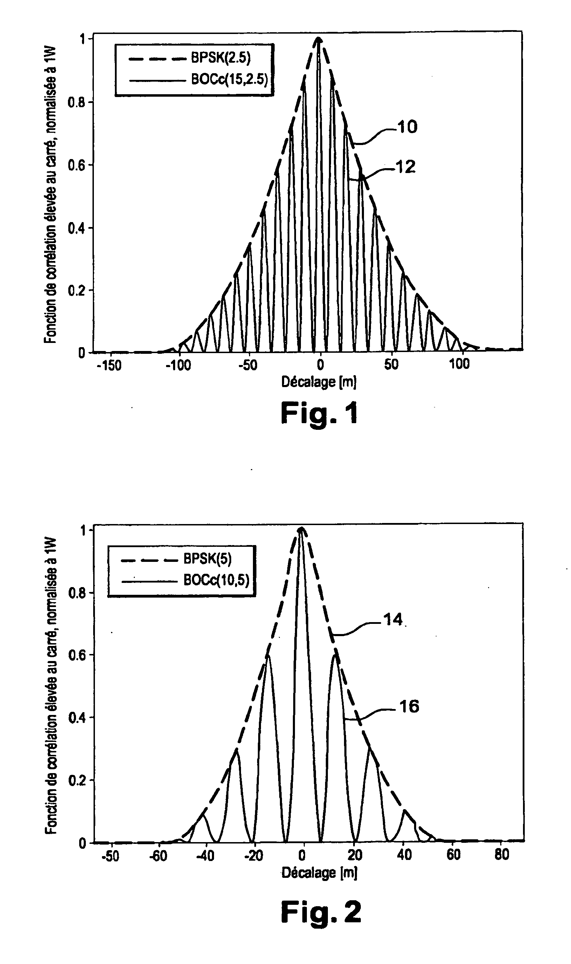

Les modulations à sous-porteuses visées ci-dessus ont certains avantages par rapport à des modulations BPSK («de l'anglais « Binary Phase Shift Keying ») classiques, notamment au niveau de la précision de mesure de position réalisable sur base des observables de code. Cependant, les formes d'onde d'étalement à sous-porteuse présentent aussi des inconvénients, car leur acquisition et leur poursuite sont plus difficiles à réaliser que p. ex. l'acquisition et la poursuite d'un signal de type BPSK. On peut expliquer ceci à l'aide des fonctions d'auto-corrélation, illustrées dans les figures 1 et 2 : contrairement à la fonction d'auto-corrélation d'une modulation BPSK (courbes 10 et 14) qui ne présente qu'un seul extremum (pour un décalage temporel de 0), celle d'une modulation à sous-porteuse (courbes 12 et 16) présente des oscillations et donc plusieurs extrémums sur lequel la boucle de poursuite de code peut se verrouiller. En d'autres termes, un discriminateur de boucle de poursuite de code profitant de la précision supérieure conférée par la sous-porteuse aura le désavantage d'être ambigu (dans le sens que le décalage temporel entre la forme d'onde d'étalement du signal reçu et de sa réplique interne est potentiellement évalué par rapport à un mauvais pic de la fonction de corrélation.) Notons que les figures 1 et 2 montrent les auto-corrélations élevées au carré.

Le problème décrit ci-dessus est mentionné dans la demande de brevet française FR 2 853 967, qui décrit un procédé d'acquisition d'un signal de radionavigation selon l'état de la technique. Selon ce procédé, en phase d'acquisition d'un signal de radionavigation modulé par une forme d'onde de type BOC, on essaye de maximiser la corrélation en éliminant les contributions de la sous-porteuse. Ainsi, lors de l'acquisition du signal on effectue en principe une recherche d'un pic de corrélation non-ambigu. Toujours selon le procédé de la demande FR 2 853 967, en phase de poursuite du signal de radionavigation, on réalise indépendamment l'asservissement des phases de porteuse et de forme d'onde d'étalement en exploitant la précision supérieure de la sous-porteuse. En d'autres termes, en mode poursuite, un récepteur mettant en oeuvre ce procédé utilise, dans la boucle de poursuite de code, uniquement un discriminateur ambigu. Evidemment, il y a le risque que la boucle de poursuite de forme d'onde d'étalement verrouille sur un pic latéral de la fonction d'auto-corrélation ou perde le verrouillage sur le pic central en cours d'opération.

La demande de brevet internationale WO 2008/090323 A1 décrit un procédé de réception de signaux de radionavigation BOC ou MBOC, dans lequel on utilise une variable $\tau_1^{\bullet}$ et son estimée $\hat{\tau}_1^{\bullet}$ pour quantifier le décalage entre la sous-porteuse (ne contenant pas le code) du signal reçu et la sous-porteuse locale (ne contenant pas le code). On utilise en outre une variable $\tau$ et son estimée $\hat{\tau}$ pour quantifier le décalage entre le code du signal reçu et la réplique locale du code. L'estimée $\hat{\tau}_1^{\bullet}$ est ambiguë au sens qu'elle peut être éloignée de la vraie valeur de $\tau$ d'un nombre entier inconnu de demi-cycles de la sous-porteuse. Les décalages $\tau$ et $\tau_1^{\bullet}$ sont traités en tant que quantités indépendantes et c'est seulement à une étape finale de correction que les estimées $\hat{\tau}_1^{\bullet}$ et $\hat{\tau}$ sont combinées de manière arithmétique selon un principe de vernier pour lever l'ambiguïté inhérente de l'estimée $\hat{\tau}_1^{\bullet}$.

**Objet de l'invention**

Un objectif de la présente invention est de réduire le risque que l'observable de code soit falsifiée au cas ou la boucle de poursuite de forme d'onde d'étalement verrouillerait sur un pic latéral de la fonction d'auto-corrélation de la forme d'onde d'étalement ou perdrait verrouillage sur le pic central en cours d'opération. Cet objectif est atteint au moyen d'un dispositif tel que défini à la revendication 1 ou d'un procédé tel que défini à la revendication 11.

**Description générale de l'invention**

Selon un premier aspect de l'invention, il est proposé un dispositif de poursuite d'un signal de radionavigation (ci-après « signal entrant ») comprenant une porteuse modulée par une forme d'onde d'étalement comprenant à son tour une sous-porteuse et un code pseudo-aléatoire. Un tel dispositif peut faire partie, par exemple d'un récepteur de signaux de radionavigation (« récepteur GPS »). On assume ici que rythme de la sous-porteuse est supérieur au rythme de bribes du code pseudo-aléatoire. Le dispositif est doté d'un ensemble de corrélateurs configuré pour produire des valeurs de corrélation entre le signal entrant et des répliques internes de ce signal, qui comprennent notamment des répliques internes de la forme d'onde d'étalement avec une réplique de la sous-porteuse en phase et une réplique de la sous-porteuse en quadrature de phase, et d'une boucle de poursuite de forme d'onde d'étalement. Celle-ci comporte une unité de discrimination connectée à l'ensemble de corrélateurs et configurée pour produire, en fonction des valeurs de corrélation, un signal d'asservissement de forme d'onde d'étalement gouvernant les écarts temporels entre les répliques internes de la forme d'onde d'étalement et la forme d'onde d'étalement modulant le signal de radionavigation. L'unité de discrimination comprend, d'une part, un discriminateur ambigu, basé sur une fonction de corrélation à plusieurs extremums (c.-à-d. sur une fonction de corrélation faisant intervenir des contributions de la sous-porteuse), pour produire en sortie, en fonction des valeurs de corrélation, un premier signal de décalage temporel. D'autre part, l'unité de discrimination comprend un discriminateur non-ambigu, basé sur une fonction de corrélation à extremum unique (c.-à-d. sur une fonction de corrélation dans laquelle les contributions de la sous-porteuse sont éliminées), pour produire en sortie, en fonction des valeurs de corrélation, un second signal de décalage temporel. Outre les discriminateurs, l'unité de discrimination comprend une unité de sélection configurée de manière à détecter si les premier et second signaux de décalage temporel sont en concordance et à sélectionner en tant que le signal d'asservissement de forme d'onde d'étalement soit le premier signal de décalage temporel, si l'unité de sélection détecte que les premier et second signaux de décalage temporel sont en concordance, soit, le second signal de décalage temporel dans le cas contraire. On appréciera qu'en mode poursuite, le dispositif selon l'invention ne s'appuie pas uniquement sur un discriminateur ambigu. Au contraire, un discriminateur non-ambigu est opéré en parallèle et la cohérence des discriminateurs ambigu et non-ambigu est continuellement surveillée en temps réel par l'unité de sélection. En fonctionnement non perturbé, celle-ci préférera le signal de décalage temporel du discriminateur ambigu comme signal d'asservissement, étant donné que l'erreur résiduelle du discriminateur non-ambigu est plus faible et permet donc une poursuite plus rapprochée de la forme d'onde d'étalement. Par contre, si l'unité de sélection constate que les discriminateurs ambigu et non-ambigu sont en désaccord, la poursuite sera continuée sur base du discriminateur non-ambigu jusqu'à ce que la concordance des discriminateurs soit de nouveau rétablie. Le discriminateur non-ambigu et l'unité de sélection agissent donc comme « filet de sécurité » au cas où le discriminateur perdrait le pic central de la fonction d'auto-corrélation. Par ailleurs, l'unité de sélection veille à ce que le discriminateur ambigu et précis soit utilisé dès que possible (c.-à-d. dès que la concordance entre les discriminateurs ambigu et non-ambigu est détectée.) Il est à noter que le pic central de la fonction de corrélation sur laquelle est basée le discriminateur ambigu correspond à un extrémum global de cette fonction dans la plage de corrélation, c.-à-d. dans une plage de temps de durée égale à la durée des répliques locales mélangées au signal de radionavigation entrant. En outre, le pic central de la fonction d'auto-corrélation sur laquelle est basée le discriminateur ambigu et l'extrémum unique de la fonction de corrélation du discriminateur non-ambigu se trouvent théoriquement (c.-à-d. sauf erreurs de mesure, influences du bruit, etc.) au même décalage temporel. Ceci est dû au fait que les estimées du code et de la sous-porteuse pour calculer le discriminateur ambigu sont élaborées à partir de la même commande issue d'un unique oscillateur.

De préférence, l'unité de sélection comprend un détecteur d'ambiguïté configuré pour décider si les premier et second signaux de décalage temporel sont en concordance et un multiplexeur qui, sous la commande du détecteur d'ambiguïté, sélectionne soit le premier, soit le second signal de décalage temporel et le produit en sortie. Une possibilité pour décider quant à la concordance ou la non-concordance des discriminateurs est de calculer un indicateur de concordance et de le comparer avec une valeur seuil. Selon que l'indicateur dépasse ou reste en dessous de la valeur seuil, le détecteur d'ambiguïté sélectionne l'un ou l'autre discriminateur. Evidemment, le calcul d'un tel indicateur ou, de manière analogue, de la valeur seuil, peut être pondéré par d'autres paramètres, p. ex. le rapport signal sur bruit, le biais RF différentiel code/sous-porteuse, etc.

Selon un mode de réalisation particulièrement avantageux du dispositif, le détecteur d'ambiguïté est monté en aval des discriminateurs ambigu et non-ambigu de sorte à recevoir les premier et second signaux de décalage temporel en entrée. Selon un mode de réalisation alternatif, le détecteur d'ambiguïté est monté en aval de l'ensemble de corrélateurs de sorte à recevoir les valeurs de corrélation en entrée et dans lequel le détecteur d'ambiguïté est configuré de manière à décider sur base des valeurs de corrélation si les premier et second signaux de décalage temporel sont concordants. De préférence, le détecteur d'ambiguïté calcule comme indicateur de concordance la valeur absolue de la différence entre les premier et second signaux de décalage et la compare à une valeur seuil correspondant à peu près à la moitié de l'erreur (en valeur absolue) qui résulterait d'un verrouillage sur le premier pic à gauche ou à droite du pic central de la fonction d'auto-corrélation de la forme d'onde d'étalement.

Dans une variante avantageuse, le dispositif comprend un estimateur de rapport signal sur bruit produisant une estimée du rapport signal sur bruit et le détecteur d'ambiguïté est configuré de manière à tenir compte de l'estimée du rapport signal sur bruit dans la décision si les premier et second signaux de décalage temporel sont concordants. Ainsi, l'unité de sélection pourrait pondérer le choix du signal de décalage temporel à l'aide de l'estimée du rapport signal sur bruit. Par exemple, le détecteur d'ambiguïté pourrait être configuré de manière à avoir une tendance vers le signal de décalage temporel du discriminateur ambigu pour un rapport signal sur bruit élevé et une tendance vers le signal de décalage temporel du discriminateur non-ambigu pour un rapport signal sur bruit faible. En pratique, une telle tendance du détecteur d'ambiguïté pourrait être réalisée par pondération de l'indicateur d'ambiguïté (ou, par analogie, de la valeur seuil) à l'aide de l'estimée du rapport signal sur bruit.

La boucle de poursuite de forme d'onde d'étalement comprend de préférence un générateur de répliques de sous-porteuse en phase et en quadrature, un générateur de réplique de code pseudo-aléatoire et un oscillateur, dit oscillateur de code, fournissant un signal de synchronisation aux générateurs de réplique interne de sous-porteuse et de réplique de code pseudo-aléatoire, l'oscillateur de code étant piloté par le signal d'asservissement de forme d'onde d'étalement. Dans cette configuration, l'oscillateur de code (de préférence un oscillateur à commande numérique) produit le signal de synchronisation en fonction du signal de décalage temporel sélectionné par l'unité de sélection, dans l'effort de synchroniser les répliques de forme d'onde d'étalement sur la forme d'onde d'étalement du signal entrant. Il est à noter que le même oscillateur de code fournit le signal de synchronisation aux générateurs de réplique interne de sous-porteuse et de réplique de code pseudo-aléatoire, ce qui assure l'alignement temporel de la réplique de code pseudo-aléatoire et des répliques internes de sous-porteuse dans la ou les répliques locales de la forme d'onde d'étalement. Autrement dit, l'écart temporel entre les répliques internes de sous-porteuse et la réplique de code pseudo-aléatoire est, en principe, fixe et ne représente donc pas une variable à varier et optimiser en cours d'acquisition ou de poursuite comme dans le procédé de la demande WO 2008/090323 A1.

Avantageusement, le dispositif de poursuite d'un signal de radionavigation est pourvu d'une boucle de poursuite de porteuse comportant un générateur de réplique interne de porteuse fournissant une réplique interne de porteuse à l'ensemble de corrélateurs, un oscillateur, dit oscillateur de porteuse, fournissant un signal de synchronisation au générateur de réplique interne de porteuse, un discriminateur de porteuse connecté à l'ensemble de corrélateurs et configuré pour fournir à l'oscillateur de porteuse, en fonction des valeurs de corrélation, un signal d'asservissement de porteuse gouvernant l'écart de phase entre porteuse et la réplique interne de la porteuse.

L'ensemble de corrélateurs comprend de préférence une section de corrélation en avance, une section de corrélation prompte et une section de corrélation en retard.

Il sera apprécié que l'unité de discrimination peut être réalisée comme processeur, sur lequel les discriminateur ambigu, discriminateur non-ambigu et unité de sélection peuvent être implémentés sous forme de programme câblé ou de logiciel exécutable par le processeur.

Un autre aspect de l'invention concerne un procédé de poursuite d'un signal de radionavigation entrant tel qu'il est mis en oeuvre par le dispositif décrit de manière générale ci-dessus. Avec les mêmes hypothèses pour le signal entrant, ce procédé comprend :

a) produire des valeurs de corrélation entre le signal de radionavigation entrant et des répliques internes du signal de radionavigation, les répliques internes du signal de radionavigation comprenant des répliques internes de la forme d'onde d'étalement avec une sous-porteuse en phase et en quadrature ;

b) produire, en fonction des valeurs de corrélation, un signal d'asservissement de forme d'onde d'étalement gouvernant les écarts temporels entre les répliques internes de la forme d'onde d'étalement et la forme d'onde d'étalement modulant le signal de radionavigation ;

c) évaluer un discriminateur ambigu, basé sur une fonction de corrélation à plusieurs extremums, pour produire, en fonction des valeurs de corrélation, un premier signal de décalage temporel;

d) évaluer un discriminateur non-ambigu, basé sur une fonction de corrélation à extremum unique, pour produire, en fonction des valeurs de corrélation, un second signal de décalage temporel ;

e) détecter si les premier et second signaux de décalage temporel sont concordants ; et

f) sélectionner comme signal d'asservissement de forme d'onde d'étalement soit le premier signal de décalage temporel si la concordance entre les premier et second signaux de décalage temporel est détectée, soit le second signal de décalage temporel dans le cas contraire.

Notons que le procédé peut optionnellement comprendre d'autres étapes. Des modes de réalisation préférés du procédé se déduisent sans difficulté de la description du fonctionnement du dispositif.

Il sera apprécié que le procédé de poursuite selon l'invention peut être utilisé suite à un procédé d'acquisition quelconque d'un signal de radionavigation entrant est compatible. La phase de transition entre le mode d'acquisition et le mode de poursuite peut être réalisée à l'aide d'un discriminateur ambigu ou avec un discriminateur non-ambigu. Si, en phase de transition, la boucle de poursuite de forme d'onde d'étalement s'est verrouillée sur un pic d'auto-corrélation latéral, ceci est détecté lors de l'exécution du procédé de poursuite selon l'invention, et le discriminateur non-ambigu sera utilisé comme signal d'asservissement de boucle de forme d'onde d'étalement jusqu'à ce que le discriminateur ambigu concorde avec le discriminateur non-ambigu.

**Brève description des dessins**

D'autres particularités et caractéristiques de l'invention ressortiront de la description détaillée de quelques modes de réalisation avantageux présentés ci-dessous, à titre d'illustration, en référence aux dessins annexés. Dans ceux-ci :

Fig. 1 est un graphique montrant les fonctions d'auto-corrélation (élevées au carré) d'une modulation BPSK(2,5) et d'une modulation BOCc(15 ; 2,5) ;

Fig. 2 est un graphique montrant les fonctions d'auto-corrélation (élevées au carré) d'une modulation BPSK(5) et d'une modulation BOCc(10 ; 5) ;

Fig. 3 est un schéma de principe d'un récepteur de signaux de radionavigation selon un premier mode de réalisation préféré de l'invention ;

Fig. 4 est un schéma de principe d'un récepteur de signaux de radionavigation selon un deuxième mode de réalisation préféré de l'invention ;

Fig. 5 est un ordinogramme d'une méthode préférée pour détecter si les discriminateurs ambigu et non-ambigu sont en concordance ;

Fig. 6 est un schéma de principe d'un mode de réalisation d'un bloc (ensemble) de corrélateurs tel qu'il peut être implémenté dans l'invention ;

Fig. 7 est un schéma de principe d'un autre mode de réalisation d'un bloc de corrélateurs tel qu'il peut être implémenté dans l'invention ; et

Fig. 8 est un ordinogramme d'une variante de la méthode de la figure 5.

**Description d'une exécution préférée**

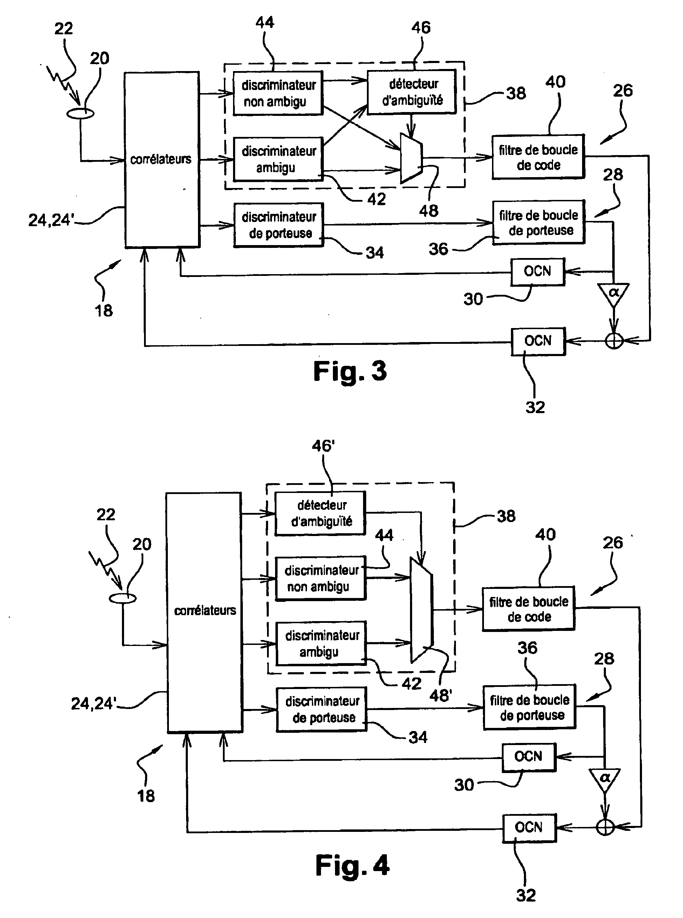

Les figures 3 et 4 montrent, de manière schématique et simplifiée, un récepteur 18 de signaux de radionavigation selon un premier mode de réalisation préféré de l'invention. Le récepteur 18 comprend une interface de réception 20 pour recevoir un signal de radionavigation 22 et un dispositif de poursuite de signal. Des interfaces de réception sont bien connues dans le domaine technique et incluent typiquement une antenne et un « front-end » pour transposer le signal reçu par l'antenne sur une fréquence intermédiaire et le numériser. Le signal reçu est ensuite entré dans le dispositif de poursuite de signal, qui comprend un ensemble de corrélateurs 24 ou 24', qui corrèlent le signal entrant avec des répliques internes du signal de radionavigation, une boucle de poursuite de forme d'onde d'étalement 26 et une boucle de poursuite de porteuse 28. Dans la représentation de la figure 3, la génération des répliques internes est supposée avoir lieu à l'intérieur du bloc 24 ou 24' et expliquée plus en détail dans la suite.

La boucle de poursuite de porteuse 28 comprend un oscillateur de porteuse 30 à commande numérique, fournissant un signal de synchronisation au générateur de réplique interne de porteuse (qui n'est pas montré sur la figure 3), et un discriminateur de porteuse 34, connecté en sortie du bloc de corrélateurs 24 ou 24', qui fournit à l'oscillateur de porteuse via un filtre de boucle de poursuite de porteuse 36, en fonction des valeurs de corrélation, un signal d'asservissement de porteuse gouvernant l'écart de phase entre porteuse et la réplique interne de porteuse.

La boucle de poursuite de forme d'onde d'étalement 26 comprend un oscillateur de code à commande numérique 32, fournissant un signal de synchronisation aux générateurs de réplique interne de sous-porteuse et de réplique de code pseudo-aléatoire (non illustrés sur la figure 3), et une unité de discrimination 38 connectée en sortie du bloc de corrélateurs 24 ou 24', qui fournit à l'oscillateur de code 32, via un filtre de boucle de poursuite de forme d'onde d'étalement 40, en fonction des valeurs de corrélation, un signal d'asservissement de forme d'onde d'étalement gouvernant les écarts temporels entre les répliques internes de la forme d'onde d'étalement et la forme d'onde d'étalement modulant le signal de radionavigation entrant.

L'unité de discrimination 38 de la boucle de poursuite de forme d'onde d'étalement 26 comprend un discriminateur ambigu 42, un discriminateur non-ambigu 44, et une unité de sélection qui détecte si les signaux de décalage temporel produits par les discriminateurs ambigu et non-ambigu sont concordants et sélectionne le signal de décalage temporel du discriminateur ambigu 42 si les premier et second signaux de décalage temporel sont détectés concordants ou le signal de décalage temporel du discriminateur non-ambigu 44 dans le cas contraire.

Selon le mode de réalisation de la figure 3, l'unité de discrimination 38 comprend comme unité de sélection un détecteur d'ambiguïté 46 et un multiplexeur 48, montés tous les deux en aval des discriminateurs ambigu 42 et non-ambigu 44 de sorte à recevoir en entrée les signaux de décalage temporel produits par ceux-ci. Le détecteur d'ambiguïté 46 évalue en temps réel si le discriminateur ambigu 42 est susceptible d'avoir verrouillé sur un pic d'auto-corrélation latéral et produit le signal de commande pour le multiplexeur 48 en fonction de cette évaluation.

Selon le mode de réalisation de la figure 4, l'unité de discrimination 38 comprend un détecteur d'ambiguïté 46', connecté en sortie du bloc de corrélation 24, 24' de sorte à recevoir les valeurs de corrélation en entrée, et un multiplexeur 48', monté en aval des discriminateurs ambigu 42 et non-ambigu 44 de sorte à recevoir en entrée les signaux de décalage temporel produits par ceux-ci. En se basant sur les mêmes valeurs de corrélations que les discriminateurs reçoivent en entrée, le détecteur d'ambiguïté 46' évalue en temps réel s'il est vraisemblable que le discriminateur ambigu 42 a calculé son décalage temporel par rapport à un pic d'auto-corrélation latéral et produit le signal de commande pour le multiplexeur 48' en fonction de cette évaluation.

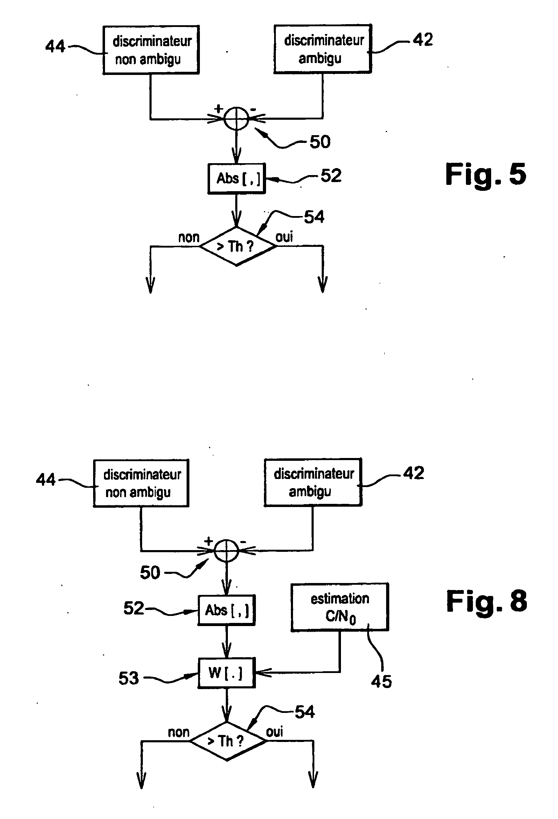

La figure 5 illustre comment le détecteur d'ambiguïté peut évaluer si les discriminateurs ambigu 42 et non-ambigu 44 concordent dans leurs signaux de décalage temporel (c.-à-d. si le discriminateur ambigu 42 a probablement calculé son décalage temporel par rapport à un pic d'auto-corrélation latéral.) Le schéma de la figure 5 utilise les signaux de décalage temporel des deux discriminateurs 42, 44 en entrée et calcule le signal de différence (au numéro de référence 50). La valeur absolue du signal de différence (évaluée en 52) est ensuite comparée à une valeur seuil Th (de l'anglais « threshold ») en 54. Tant que la valeur absolue de la différence reste en dessous de la valeur seuil, le signal de commande issu par le détecteur d'ambiguïté pour le multiplexeur est tel que le signal de décalage temporel du discriminateur ambigu est réinjecté dans la boucle de poursuite de forme d'onde d'étalement. Dans l'autre cas, le multiplexeur commute vers le signal de décalage temporel du discriminateur non-ambigu. Le tableau suivant indique les ambiguïtés de sous-porteuse pour certaines formes d'onde d'étalement et les valeurs seuil correspondantes appropriées.

| Type de sous-porteuse | Ambiguïté [m] | Valeur seuil [m] |
|---|---|---|
| BOCc(15 ;2,5) | 9,8 | 4,9 |
| BOCc(10 ;5) | 14,7 | 7,3 |
| BOC(1 ;1) | 146,6 | 73,3 |

L'ambiguïté indiquée dans le tableau correspond à l'erreur induite sur la pseudo-distance à cause d'un verrouillage de la boucle de code sur le premier pic latéral de la fonction d'auto-corrélation. On notera donc que les valeurs seuil correspondent de préférence à la moitié du décalage entre deux pics consécutifs de la fonction d'auto-corrélation.

Une variante de la méthode de la figure 5 est montrée sur la figure 8. Pour simplifier, uniquement les différences par rapport à la méthode décrite ci-dessus sont détaillées. La valeur absolue évaluée en 52 est pondérée en 53 par une estimée du rapport signal sur bruit $C/N_0$ provenant d'un estimateur de rapport signal sur bruit 45 connu en soi dans le domaine technique. Par exemple, si le rapport $C/N_0$ est relativement élevé (p.ex. supérieur à un seuil prédéfini), la valeur produite en 52 pourrait être réduite, de sorte à créer une tendance du détecteur d'ambiguïté vers le signal de décalage temporel du discriminateur ambigu 42. Dans le cas contraire, c.-à-d. si le rapport $C/N_0$ est relativement faible (p.ex. inférieur au seuil prédéfini), la valeur produite en 52 pourrait être augmentée pour faire tendre le détecteur d'ambiguïté vers le signal de décalage temporel du discriminateur non-ambigu 44. Selon une autre variante de cette méthode, l'on pourrait (alternativement ou supplémentairement) pondérer la valeur seuil Th par l'estimée du rapport signal sur bruit.

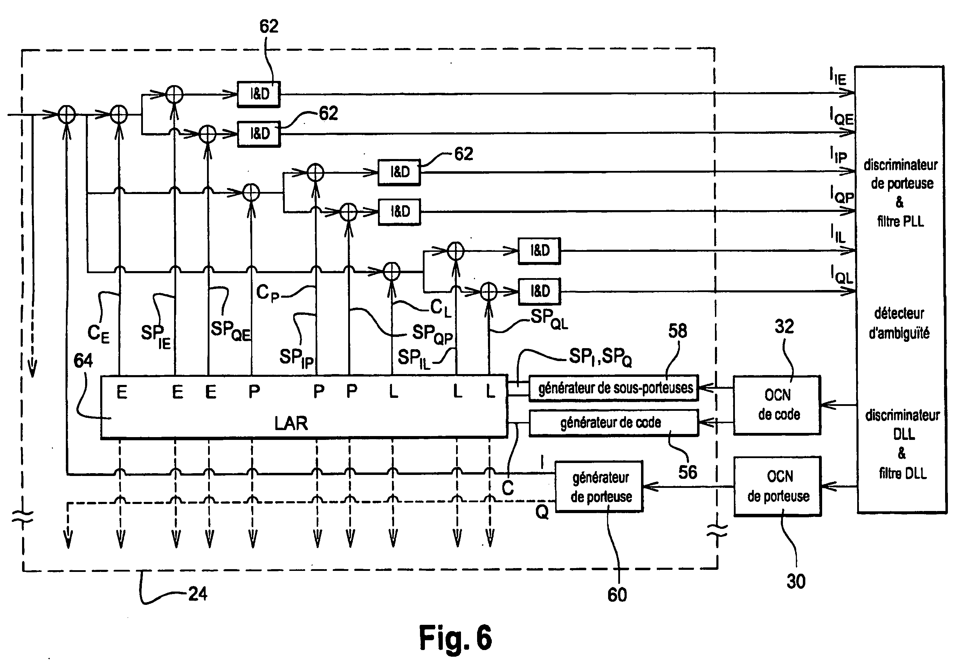

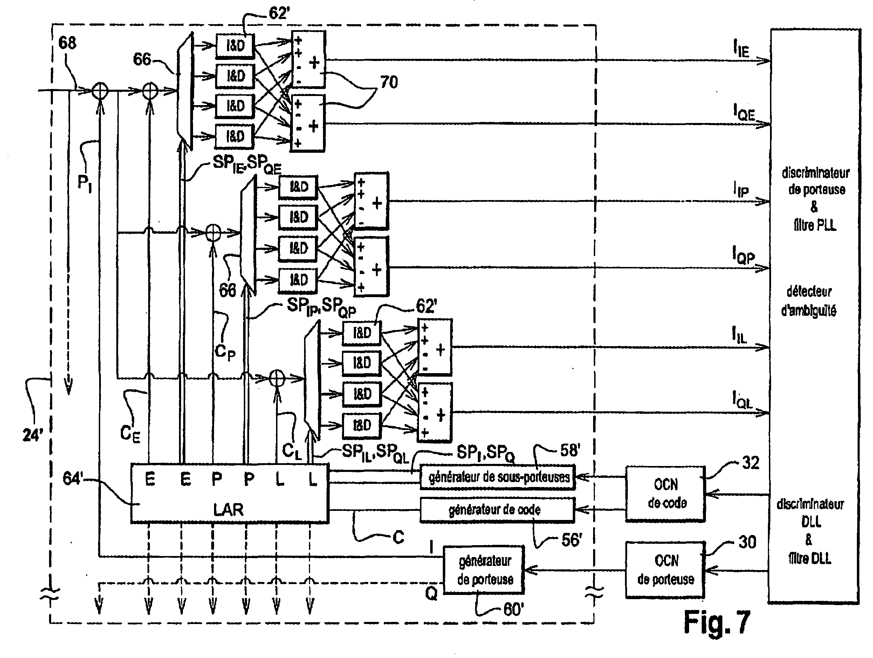

Les figures 6 et 7 montrent différents modes de réalisation d'un bloc de corrélateurs 24, respectivement 24', utilisables dans le contexte de l'invention. Selon le mode de réalisation de la figure 6, le bloc de corrélateurs 24 comprend un générateur de code 56 produisant une réplique interne du code pseudo-aléatoire sous la commande du signal de synchronisation fourni par l'oscillateur de code 32, un générateur de sous-porteuse 58 produisant des répliques internes de la sous-porteuse en phase et en quadrature de phase sous la commande du signal de synchronisation fourni par l'oscillateur de code 32, et un générateur de porteuse 60 produisant des répliques internes de la porteuse sous la commande du signal de synchronisation fourni par l'oscillateur de porteuse 30. Notons que le générateur de sous-porteuse 58 produit une réplique de sous-porteuse en phase ($SP_I$) avec le signal de synchronisation de l'oscillateur de code 32 et une réplique en quadrature de phase ($SP_Q$) par rapport à ce signal. Pareillement, le générateur de porteuse 60 produit une réplique de porteuse en phase avec le signal de synchronisation de l'oscillateur de porteuse 30 et une réplique en quadrature de phase par rapport à ce signal.

Le bloc de corrélateurs 24 comprend une section de corrélation en avance, une section de corrélation prompte et une section de corrélation en retard. Dans ces sections de corrélation, le signal entrant est mélangé, respectivement, avec des répliques en avance, promptes et en retard de la forme d'onde d'étalement. Le bloc de corrélation comprend une ligne à retard 64 (« delay line ») dans laquelle sont produites des répliques de sous-porteuse en avance ($SP_{IE}$,

$SP_{QE}$), promptes ($SP_{IP}$, $SP_{QP}$) et en retard ($SP_{IL}$, $SP_{QL}$) et des répliques de code en avance ($C_E$), prompte ($C_P$) et en retard ($C_L$).

Pour chacune de ces sections, le signal de radionavigation entrant (à gauche de la figure 6) est distribué sur différentes voies de corrélation pour y être mélangé (multiplié) avec une réplique de la porteuse (soit avec la réplique en phase, soit avec la réplique en quadrature de phase), une réplique du code pseudo-aléatoire et une réplique de la sous-porteuse (soit avec la réplique en phase, soit avec la réplique en quadrature de phase). Dans les plus fines ramifications des voies de corrélation, le signal entrant se trouve ainsi multiplié avec une réplique locale du signal de radionavigation et y est intégré par l'intégrateur 62 respectif. Par exemple, le troisième intégrateur d'en haut de la figure 6 opère l'intégration du signal entrant mélangé à la réplique de porteuse en phase, la réplique prompte du code pseudo-aléatoire et la réplique prompte de sous-porteuse en phase et produit ainsi la valeur de corrélation $I_{IP}$. Notons que pour des raisons de simplification, la figure 6 ne montre que les voies de corrélation dans lesquelles il y a multiplication avec la réplique de porteuse en phase ; les lignes en traits interrompus en bas du schéma indiquent que celui-ci devrait être continué vers le bas avec les voies de corrélation dans lesquelles il y a multiplication avec la réplique de porteuse en quadrature phase.

Le bloc de corrélation 24 est donc configuré pour effectuer les opérations de corrélations suivantes :

$$I_{IX} = \int S_{reçu}(t) \cdot \sin(2\pi f_c t) \cdot SP_{IX}(t) \cdot C_X(t) dt$$
$$I_{QX} = \int S_{reçu}(t) \cdot \sin(2\pi f_c t) \cdot SP_{QX}(t) \cdot C_X(t) dt$$
$$Q_{IX} = \int S_{reçu}(t) \cdot \cos(2\pi f_c t) \cdot SP_{IX}(t) \cdot C_X(t) dt \quad \textbf{(Eq. 3)}$$
$$Q_{QX} = \int S_{reçu}(t) \cdot \cos(2\pi f_c t) \cdot SP_{QX}(t) \cdot C_X(t) dt$$

où

X = E (« Early » - en avance), P (prompt) ou L (« Late » - en retard),

$S_{reçu}$ est le signal de radionavigation entrant ;

$\sin(2\pi f_c t)$, $\cos(2\pi f_c t)$ sont les répliques de porteuse en phase et en quadrature de phase, respectivement ;

$SP_{IX}$, $SP_{QX}$ sont les répliques de sous-porteuse (en avance, promptes ou en retard) en phase et en quadrature de phase, respectivement ; et

$C_X$ est la réplique du code pseudo-aléatoire (en avance, prompte ou en retard).

Notons que l'ordre des multiplications dans les différentes voies de corrélation peut être varié de manière arbitraire à cause de la commutativité et de l'associativité de la multiplication.

En sortie du bloc de corrélateurs, l'on dispose donc des valeurs de corrélations $I_{IE}$, $I_{QE}$, $Q_{IE}$, $Q_{QE}$, $I_{IP}$, $I_{OP}$, $Q_{IP}$, $Q_{QP}$, $I_{IL}$, $I_{QL}$, $Q_{IL}$, et $Q_{QL}$ qui peuvent être utilisées par les discriminateurs 34, 42 et 44 (voir figures 3 et 4).

Le bloc de corrélateurs 24' dans le mode de réalisation selon la figure 7 présente une architecture différente de celui de la figure 6 mais réalise essentiellement la même fonctionnalité ; en particulier, il accepte les mêmes signaux en entrée et produit les mêmes signaux en sortie que le bloc de corrélateurs de la figure 6. Le bloc de corrélateurs 24' de la figure 7 comprend un générateur de code 56' produisant une réplique interne du code pseudo-aléatoire sous la commande du signal de synchronisation fourni par l'oscillateur de code 32, un générateur de sous-porteuse 58' produisant des répliques internes de la sous-porteuse en phase et en quadrature de phase sous la commande du signal de synchronisation fourni par l'oscillateur de code 32, et un générateur de porteuse 60' produisant des répliques internes de la porteuse sous la commande du signal de synchronisation fourni par l'oscillateur de code 30. Le générateur de sous-porteuse 58' produit une réplique de sous-porteuse en phase ($SP_I$) avec le signal de synchronisation de l'oscillateur de code 32 et une réplique en quadrature de phase ($SP_Q$) par rapport à ce signal. Pareillement, le générateur de porteuse 60' produit une réplique de porteuse en phase avec le signal de synchronisation de l'oscillateur de porteuse 30 et une réplique en quadrature de phase par rapport à ce signal.

Le bloc de corrélateurs 24' comprend une section de corrélation en avance, une section de corrélation prompte et une section de corrélation en retard. Dans ces sections de corrélation, le signal entrant est mélangé, respectivement, avec des répliques en avance, promptes et en retard de la forme d'onde d'étalement. Le bloc de corrélation comprend une ligne à retard 64' dans laquelle sont produites des répliques de sous-porteuse en avance ($SP_{IE}$, $SP_{QE}$), en phase ($SP_{IP}$, $SP_{QP}$) et en retard ($SP_{IL}$, $SP_{QL}$) et des répliques de code en avance ($C_E$), en phase ($C_P$) et en retard ($C_L$).

Pour chacune de ces sections, le signal de radionavigation entrant (à gauche de la figure 7) est distribué sur différentes voies de corrélation pour y être mélangé (multiplié) avec une réplique de la porteuse (soit avec la réplique en phase, soit avec la réplique en quadrature de phase) et une réplique du code pseudo-aléatoire. La multiplication avec les répliques de sous-porteuse est effectuée à l'aide de démultiplexeurs 66 commandés par les signaux de réplique de sous-porteuse en phase ($SP_{IE}$, $SP_{IP}$ ou $SP_{IL}$) et en quadrature ($SP_{QE}$, $SP_{QP}$ ou $SP_{QL}$). Ce procédé est maintenant expliqué pour la voie de corrélation du signal entrant avec la réplique de porteuse en phase et la réplique de forme d'onde d'étalement en avance (en haut de la figure 7). Le signal entrant 68 est d'abord multiplié par la réplique de porteuse et la réplique de code $C_E$. Ensuite, le signal de valeur par exemple 1 est démultiplexé (réparti) par le démultiplexeur 66 sur quatre voies d'intégration en fonction des états des signaux binaires $SP_{IE}$ $SP_{QE}$ selon le tableau suivant :

| $SP_{IE}(t)$; $SP_{QE}(t)$ | Voie 1 | Voie 2 | Voie 3 | Voie 4 |
|---|---|---|---|---|
| 1 ;1 | 1 | 0 | 0 | 0 |
| 1 ; -1 | 0 | 1 | 0 | 0 |
| -1 ;1 | 0 | 0 | 1 | 0 |
| -1 ;-1 | 0 | 0 | 0 | 1 |

Par exemple, pour des intervalles de temps, dans lesquels les valeurs binaires des deux répliques de sous-porteuse sont 1, le démultiplexeur sort la valeur 1 sur la première voie et 0 sur les autres. De même, pour des intervalles de temps, dans lesquels la valeur binaire de la réplique $SP_{IE}$ est 1 et celle de la réplique $SP_{QE}$ est -1, le démultiplexeur sort la valeur 1 sur la deuxième voie et 0 sur les autres. Les signaux sur les quatre voies en sortie du démultiplexeur 66 sont intégrés individuellement par les intégrateurs 62' et ensuite recombinés à l'aide d'additionneurs pour produire les valeurs de corrélation $I_{IE}$ et $I_{QE}$. En procédant de façon analogue sur les différentes branches du bloc de corrélation 24', on retrouve finalement les mêmes valeurs de corrélation que pour la figure 6, c.-à-d. $I_{IE}$, $I_{QE}$, $Q_{IE}$, $Q_{QE}$, $I_{IP}$, $I_{QP}$, $Q_{IP}$, $Q_{IP}$, $I_{IL}$, $I_{QL}$, $Q_{IL}$, et $Q_{QL}$.

On notera que des discriminateurs de porteuse, des discriminateurs de forme d'onde d'étalement ambigus et non-ambigus sont bien connus en tant que tels dans le domaine technique. Des exemples de discriminateurs peuvent être trouvés, par exemple, dans l'article « Subcarrier Tracking Performances of BOC, ALTBOC and MBOC Signals », par A. de Latour, T. Grelier, G. Artaud, L. Ries, J-L. Issler, et V. Heiries, publié dans « Meeting Proceedings of the 20th International Technical Meeting of the Satellite Division of the Institute of Navigation ION GNSS 2007, September 25 - 28, 2007 ». Comme fonction de discriminateur de porteuse, on pourrait utiliser, par exemple :

$$\varepsilon_{porteuse} = \frac{1}{2}\arctan(2\frac{Q_{IP}I_{IP} + Q_{QP}I_{QP}}{I_{IP}^2 + I_{QP}^2 - Q_{IP}^2 - Q_{QP}^2}), \qquad \text{(Eq. 4)}$$

ou

$$\varepsilon_{porteuse} = ATAN2(Q_{IP}, I_{IP}), \qquad \text{(Eq. 5)}$$

ou autre. Comme fonction de discriminateur ambigu, on pourrait utiliser, par exemple, un discriminateur NELP (de l'anglais « Non-Coherent Early-Late ») :

$$\varepsilon_{ambigu} = NELP(I_{IP}, Q_{IP}, I_{IE}, Q_{IE}, I_{IL}, Q_{IL}), \qquad \text{(Eq. 6)}$$

ou

$$\varepsilon_{ambigu} = \frac{(I_{IE} - I_{IL}) \cdot I_{IP} + (Q_{IE} - Q_{IL}) \cdot Q_{IP}}{(I_{IP}^2 + Q_{IP}^2)}, \qquad \text{(Eq. 7)}$$

ou

$$\varepsilon_{ambigu} = \frac{(I_{IE} - I_{IL})^2 + (Q_{IE} - Q_{IL})^2}{(I_{IE} + I_{IL})^2 + (Q_{IE} + Q_{IL})^2} \qquad \textbf{(Eq. 8)}$$

ou

$$\varepsilon_{ambigu} = \frac{I_{IP}I_{QP} + Q_{IP}Q_{QP}}{I_{IP}^2 + Q_{IP}^2 + I_{QP}^2 + Q_{QP}^2} \qquad \textbf{(Eq. 9)}$$

ou

$$\varepsilon_{ambigu} = \frac{1}{2}\arctan\left(2 \times \frac{I_{IP}I_{QP} + Q_{IP}Q_{QP}}{I_{IP}^2 + Q_{IP}^2 - I_{QP}^2 - Q_{QP}^2}\right), \qquad \textbf{(Eq. 10)}$$

ou autre. Finalement, comme fonction discriminateur non-ambigu, on pourrait utiliser, par exemple, un discriminateur NELP avec élimination de sous-porteuse :

$$\varepsilon_{non-ambigu} = NELP_{sans\,SP}(I_{IP}, Q_{IP}, I_{QP}, Q_{QP}, I_{IE}, Q_{IE}, I_{QE}, Q_{QE}, I_{IL}, Q_{IL}, I_{QL}, Q_{QL}), \qquad \textbf{(Eq. 11)}$$

ou

$$\varepsilon_{ambigu} = \frac{I_{IE}^2 + I_{QE}^2 + Q_{IE}^2 + Q_{QE}^2 - I_{IL}^2 - I_{QL}^2 - Q_{IL}^2 - Q_{QL}^2}{I_{IE}^2 + I_{QE}^2 + Q_{IE}^2 + Q_{QE}^2 + I_{IL}^2 + I_{QL}^2 + Q_{IL}^2 + Q_{QL}^2}, \qquad \textbf{(Eq. 12)}$$

ou autre. Le choix du discriminateur dépend du signal de radionavigation à démoduler, notamment de la question si le signal contient une charge utile. Les différents critères pour choisir le ou les discriminateurs appropriés sont bien connus dans le domaine technique et n'ont dont pas besoin d'être répétés dans ce contexte.

**Revendications**

1. Dispositif de poursuite d'un signal de radionavigation entrant (22), ledit signal de radionavigation comprenant une porteuse modulée par une forme d'onde d'étalement comprenant à son tour une sous-porteuse et un code pseudo-aléatoire, ledit dispositif comprenant :

   un ensemble de corrélateurs (24 ; 24') configuré pour produire des valeurs de corrélation entre ledit signal de radionavigation entrant et des répliques internes du signal de radionavigation, lesdites répliques internes du signal de radionavigation comprenant des répliques internes de la forme d'onde d'étalement avec une réplique de sous-porteuse en phase et en quadrature de phase ; et
   une boucle de poursuite de forme d'onde d'étalement (26) comportant :

   une unité de discrimination (38) connectée au ensemble de corrélateurs (24 ; 24') et configurée pour produire, en fonction desdites valeurs de corrélation, un signal d'asservissement de forme d'onde d'étalement gouvernant les écarts temporels entre les répliques internes de la forme d'onde d'étalement et la forme d'onde d'étalement modulant le signal de radionavigation ;
   le dispositif étant **caractérisé en ce que** l'unité de discrimination (38) comprend
   un discriminateur ambigu (42), basé sur une fonction de corrélation à plusieurs extremums, pour produire, en fonction desdites valeurs de corrélation, un premier signal de décalage temporel ;

un discriminateur non-ambigu (44), basé sur une fonction de corrélation à extremum unique, pour produire, en fonction desdites valeurs de corrélation, un second signal de décalage temporel ; et une unité de sélection (46, 48 ; 46', 48') configurée de manière à détecter si les premier et second signaux de décalage temporel sont concordants et à sélectionner en tant que ledit signal d'asservissement de forme d'onde d'étalement soit le premier signal de décalage temporel si l'unité de sélection (46, 48 ; 46', 48') décide que les premier et second signaux de décalage temporel sont concordants, soit le second signal de décalage temporel dans le cas contraire.

2. Dispositif selon la revendication 1, dans lequel ladite unité de sélection comprend un détecteur d'ambiguïté (46 ; 46') configuré pour décider si les premier et second signaux de décalage temporel sont concordants et un multiplexeur (48 ; 48') qui, sous la commande dudit détecteur d'ambiguïté (46 ; 46') sélectionne soit le premier, soit le second signal de décalage et le produit en sortie.

3. Dispositif selon la revendication 2, dans lequel le détecteur d'ambiguïté (46) est monté en aval desdits discriminateurs ambigu (42) et non-ambigu (44) de sorte à recevoir lesdits premier et second signaux de décalage temporel en entrée.

4. Dispositif selon la revendication 2, dans lequel le détecteur d'ambiguïté (46') est monté en aval dudit ensemble de corrélateurs (24 ; 24') de sorte à recevoir lesdites valeurs de corrélation en entrée et dans lequel le détecteur d'ambiguïté (46') est configuré de manière à décider sur base des valeurs de corrélation si les premier et second signaux de décalage temporel sont concordants.

5. Dispositif selon l'une quelconque des revendications 2 à 4, comprenant un estimateur de rapport signal sur bruit (45) produisant une estimée du rapport signal sur bruit, dans lequel le détecteur d'ambiguïté (46 ; 46') est configuré de manière à tenir compte de l'estimée du rapport signal sur bruit dans la décision si les premier et second signaux de décalage temporel sont concordants.

6. Dispositif selon l'une quelconque des revendications 1 à 5, dans lequel la boucle de poursuite de forme d'onde d'étalement (26) comprend un générateur de réplique de sous-porteuse (58 ; 58'), un générateur de réplique de code pseudo-aléatoire (56 ; 56') et un oscillateur (32), dit oscillateur de code, fournissant un signal de synchronisation aux générateurs de réplique interne de sous-porteuse (58 ; 58') et de réplique de code pseudo-aléatoire (56 ; 56'), ledit oscillateur de code (32) étant piloté par ledit signal d'asservissement de forme d'onde d'étalement.

7. Dispositif selon l'une quelconque des revendications 1 à 6, pourvu d'une boucle de poursuite de porteuse (28) comportant un générateur de réplique interne de porteuse (60 ; 60') fournissant une réplique interne de porteuse à l'ensemble de corrélateurs (24 ; 24') ; un oscillateur (30), dit oscillateur de porteuse, fournissant un signal de synchronisation au générateur de réplique interne de porteuse (60 ; 60') ; un discriminateur de porteuse (34) connecté à l'ensemble de corrélateurs (24 ; 24') et configuré pour fournir à l'oscillateur de porteuse (30), en fonction desdites valeurs de corrélation, un signal d'asservissement de porteuse gouvernant l'écart de phase entre porteuse et la réplique interne de la porteuse.

8. Dispositif selon l'une quelconque des revendications 1 à 7, dans lequel ledit ensemble de corrélateurs (24 ; 24') comprend une section de corrélation en avance, une section de corrélation prompte et une section de corrélation en retard.

9. Dispositif selon l'une quelconque des revendications 1 à 8, dans lequel ladite unité de discrimination (38) est réalisée en tant que processeur, lesdits discriminateur ambigu (42), discriminateur non-ambigu (44) et unité de sélection (46, 48 ; 46', 48') étant implémentés sur ce processeur sous forme de programme câblé ou de logiciel exécutable par le processeur.

10. Récepteur de signaux de radionavigation (18), comprenant un dispositif selon l'un quelconque des revendications 1 à 9.

11. Procédé de poursuite d'un signal de radionavigation entrant, ledit signal de radionavigation comprenant une porteuse modulée par une forme d'onde d'étalement comprenant à son tour une sous-porteuse et un code pseudo-aléatoire, ledit procédé comprenant :

produire des valeurs de corrélation entre ledit signal de radionavigation entrant et des répliques internes du signal de radionavigation, lesdites répliques internes du signal de radionavigation comprenant des répliques internes de la forme d'onde d'étalement avec une sous-porteuse en phase et en quadrature ;

produire, en fonction desdites valeurs de corrélation, un signal d'asservissement de forme d'onde d'étalement gouvernant les écarts temporels entre les répliques internes de la forme d'onde d'étalement et la forme d'onde d'étalement modulant le signal de radionavigation ;

**caractérisé par**

évaluer un discriminateur ambigu, basé sur une fonction de corrélation à plusieurs extremums, pour produire, en fonction desdites valeurs de corrélation, un premier signal de décalage temporel ;

évaluer un discriminateur non-ambigu, basé sur une fonction de corrélation à extremum unique, pour produire, en fonction desdites valeurs de corrélation, un second signal de décalage temporel ;

détecter si les premier et second signaux de décalage temporel sont concordants ; et

sélectionner en tant que ledit signal d'asservissement de forme d'onde d'étalement soit le premier signal de décalage temporel si la concordance entre les premier et second signaux de décalage temporel est détectée, soit le second signal de décalage temporel dans le cas contraire.

12. Procédé selon la revendication 11, dans lequel le signal d'asservissement de forme d'onde d'étalement est utilisé pour commander une boucle de poursuite de forme d'onde d'étalement (26) comprenant un générateur de réplique de sous-porteuse (58 ; 58'), un générateur de réplique de code pseudo-aléatoire (56 ; 56') et un oscillateur (32), dit oscillateur de code, fournissant un signal de synchronisation aux générateurs de réplique interne de sous-porteuse (58 ; 58') et de réplique de code pseudo-aléatoire (56 ; 56'), ledit oscillateur de code (32) étant piloté par ledit signal d'asservissement de forme d'onde d'étalement.

**Patentansprüche**

1. Vorrichtung zur Verfolgung eines eingehenden Funknavigationssignals (22), wobei das Funknavigationssignal einen Träger umfasst, der durch eine Spreizsignalform moduliert wird, der seinerseits einen Unterträger und einen pseudozufälligen Code umfasst, wobei die Vorrichtung Folgendes umfasst:

eine Gruppe von Korrelatoren (24; 24'), die dafür eingerichtet sind, Korrelationswerte zwischen dem eingehenden Funknavigationssignal und internen Repliken des Funknavigationssignals zu erzeugen, wobei die internen Repliken des Funknavigationssignals interne Repliken der Spreizsignalform mit einer Unterträger-Replik in Phase und in Phasenquadratur umfassen; und

eine Schleife zur Verfolgung der Spreizsignalform (26) mit:

einer Diskriminierungseinheit (38), die mit der Gruppe von Korrelatoren (24; 24') verbunden ist und dafür eingerichtet ist, in Abhängigkeit der Korrelationswerte, ein Spreizsignalform-Regelungssignal zu erzeugen, das die zeitlichen Abstände zwischen den internen Repliken der Spreizsignalform und der Spreizsignalform, die das Funknavigationssignal moduliert, regelt;

wobei die Vorrichtung **dadurch gekennzeichnet ist, dass** die Diskriminierungseinheit (38) Folgendes umfasst:

einen zweideutigen Diskriminator (42), der auf einer Korrelationsfunktion mit mehreren Extrema basiert, um, in Abhängigkeit der Korrelationswerte, ein erstes Zeitversatzsignal zu erzeugen;

einen unzweideutigen Diskriminator (44), der auf einer Korrelationsfunktion mit einem einzigen Extremum basiert, um, in Abhängigkeit der Korrelationswerte, ein zweites Zeitversatzsignal zu erzeugen; und

eine Auswahleinheit (46, 48; 46', 48'), die derart eingerichtet ist, dass sie erkennt, ob das erste und das zweite Zeitversatzsignal übereinstimmend sind, und als Spreizsignalform-Regelungssignal entweder das erste Zeitversatzsignal auswählt, wenn die Auswahleinheit (46, 48; 46', 48') entscheidet, dass das erste und zweite Zeitversatzsignal übereinstimmend sind, oder andernfalls das zweite Zeitversatzsignal auswählt.

2. Vorrichtung nach Anspruch 1, wobei die Auswahleinheit einen Zweideutigkeitsdetektor (46; 46') umfasst, der dafür eingerichtet ist, zu entscheiden, ob das erste und zweite Zeitversatzsignal übereinstimmend sind, und einen Multiplexer (48; 48'), der, unter der Steuerung des Zweideutigkeitsdetektors (46; 46'), entweder das erste oder das zweite Zeitversatzsignal auswählt und es am Ausgang erzeugt.

3. Vorrichtung nach Anspruch 2, wobei der Zweideutigkeitsdetektor (46) stromabwärts des zweideutigen (42) und unzweideutigen Diskriminators (44) angeordnet ist, derart, dass er am Eingang das erste und zweite Zeitversatzsignal empfängt.

4. Vorrichtung nach Anspruch 2, wobei der Zweideutigkeitsdetektor (46') stromabwärts der Gruppe von Korrelatoren (24; 24') angeordnet ist, derart, dass er am Eingang die Korrelationswerte empfängt, und wobei der Zweideutigkeitsdetektor (46') derart eingerichtet ist, dass er auf Basis der Korrelationswerte entscheidet, ob das erste und zweite Zeitversatzsignal übereinstimmend sind.

5. Vorrichtung nach einem der Ansprüche 2 bis 4, umfassend einen Signal-Rausch-Abstands-Schätzer (45), der eine Schätzung des Signal-Rausch-Abstands erzeugt, wobei der Zweideutigkeitsdetektor (46; 46') derart eingerichtet ist, dass er die Schätzung des Signal-Rausch-Abstands bei der Entscheidung berücksichtigt, ob das erste und zweite Zeitversatzsignal übereinstimmend sind.

6. Vorrichtung nach einem der Ansprüche 1 bis 5, wobei die Schleife zur Verfolgung der Spreizsignalform (26) einen Generator von Unterträger-Repliken (58; 58'), einen Generator von pseudozufälligen Code-Repliken (56; 56') und einen Oszillator (32), so genannten Code-Oszillator, der ein Synchronisationssignal an die Generatoren von internen Unterträger-Repliken (58; 58') und von pseudozufälligen Code-Repliken (56; 56') liefert, umfasst, wobei der Code-Oszillator (32) durch das Spreizsignalform-Regelungssignal angesteuert wird.

7. Vorrichtung nach einem der Ansprüche 1 bis 6, die mit einer Schleife zur Verfolgung von Trägern (28) versehen ist und Folgendes aufweist:

einen Generator von internen Träger-Repliken (60; 60'), der eine interne Träger-Replik an die Gruppe von Korrelatoren (24; 24') liefert;
einen Oszillator (30), so genannten Träger-Oszillator, der ein Synchronisationssignal an den Generator von internen Träger-Repliken (60; 60') liefert; einen Träger-Diskriminator (34), der mit der Einheit von Korrelatoren (24; 24') verbunden ist und eingerichtet ist, um an den Träger-Oszillator (30), in Abhängigkeit von den Korrelationswerten, ein Träger-Regelsignal zu liefern, das den Phasenversatz zwischen Träger und der internen Trägerreplik regelt.

8. Vorrichtung nach einem der Ansprüche 1 bis 7, wobei die Gruppe von Korrelatoren (24; 24') einen voreilenden Korrelationsabschnitt, einen sofortigen Korrelationsabschnitt und einen nacheilenden Korrelationsabschnitt umfasst.

9. Vorrichtung nach einem der Ansprüche 1 bis 8, wobei die Diskriminierungseinheit (38) als Prozessor ausgebildet ist, wobei der zweideutige Diskriminator (42), der unzweideutige Diskriminator (44) und die eine Auswahleinheit (46, 48; 46', 48') in dem Prozessor in Form einer fest verdrahteten Routine oder eines durch den Prozessor ausführbaren Softwareprogramms implementiert sind.

10. Empfänger von Funknavigationssignalen (18) umfassend eine Vorrichtung nach einem der Ansprüche 1 bis 9.

11. Verfahren zur Verfolgung eines eingehenden Funknavigationssignals, wobei das Funknavigationssignal einen Träger umfasst, der durch eine Spreizsignalform moduliert wird, der seinerseits einen Unterträger und einen pseudozufälligen Code umfasst, wobei das Verfahren Folgendes umfasst:

Erzeugen von Korrelationswerten zwischen dem eingehenden Funknavigationssignal und internen Repliken des Funknavigationssignals, wobei die internen Repliken des Funknavigationssignals interne Repliken der Spreizsignalform mit einem Unterträger in Phase und in Phasenquadratur umfassen;
Erzeugen, in Abhängigkeit der Korrelationswerte, eines Spreizsignalform-Regelungssignals, das die zeitlichen Abstände zwischen den internen Repliken der Spreizsignalform und der Spreizsignalform, die das Funknavigationssignal moduliert, regelt;
**gekennzeichnet durch**
Auswerten eines zweideutigen Diskriminators, der auf einer Korrelationsfunktion mit mehreren Extrema basiert, um, in Abhängigkeit der Korrelationswerte, ein erstes Zeitversatzsignal zu erzeugen;
Auswerten eines unzweideutigen Diskriminators, der auf einer Korrelationsfunktion mit einem einzigen Extremum basiert, um, in Abhängigkeit der Korrelationswerte, ein zweites Zeitversatzsignal zu erzeugen;
Erkennen, ob das erste und zweite Zeitversatzsignal übereinstimmend sind; und
Auswählen, als Spreizsignalform-Regelungssignal, entweder des ersten Zeitversatzsignals, wenn die Übereinstimmung zwischen dem ersten und zweiten Zeitversatzsignal erkannt wird, oder andernfalls des zweiten Zeitversatzsignals.

12. Verfahren nach Anspruch 11, bei dem das Spreizsignalform-Regelungssignal verwendet wird, um eine Schleife zur Verfolgung der Spreizsignalform (26) zu steuern, die Folgendes umfasst: einen Generator von Unterträger-Repliken (58; 58'), einen Generator von pseudozufälligen Code-Repliken (56; 56') und einen Oszillator (32), so genannten Code-Oszillator, der ein Synchronisationssignal an die Generatoren von internen Unterträger-Repliken (58; 58') und von pseudozufälligen Code-Repliken (56; 56') liefert, wobei der Code-Oszillator (32) durch das Spreizsignalform-Regelungssignal angesteuert wird.

**Claims**

1. A tracking device for an incoming radionavigation signal (22), said radionavigation signal comprising a carrier modulated by a spreading waveform in turn comprising a subcarrier and a pseudo-random code, said device comprising:

   a set of correlators (24; 24') configured to produce correlation values between said incoming radionavigation signal and internal replicas of the radionavigation signal, said internal replicas of the radionavigation signal comprising internal replicas of the spreading waveform with an in-phase and quadrature-phase subcarrier replica; and
   a spreading waveform tracking loop (26) comprising:

   a discrimination unit (38) connected to the set of correlators (24; 24') and configured to produce, as a function of said correlation values, a spreading waveform servo signal governing the timing differences between the internal replicas of the spreading waveform and the spreading waveform modulating the radionavigation signal;
   the device being **characterised in that** the discrimination unit (38) comprises
   an ambiguous discriminator (42), based on a correlation function with a plurality of extremums, to produce, as a function of said correlation values, a first time offset signal;
   an unambiguous discriminator (44), based on a correlation function with a unique extremum, to produce, as a function of said correlation values, a second time offset signal; and
   a selection unit (46, 48; 46', 48') configured so as to detect whether the first and second time offset signals are in agreement and to select as said spreading waveform servo signal either the first time offset signal if the selection unit (46, 48; 46', 48') decides that the first and second time offset signals are in agreement, or the second time offset signal if not.

2. A device according to claim 1, in which said selection unit comprises an ambiguity detector (46; 46') configured to decide whether the first and second time offset signals are in agreement and
   a multiplexer (48; 48') which, under the control of said ambiguity detector (46; 46'), selects either the first or the second offset signal and produces it as output.

3. A device according to claim 2, in which the ambiguity detector (46) is installed downstream of said ambiguous (42) and unambiguous (44) discriminators so as to receive said first and second time offset signals as input.

4. A device according to claim 2, in which the ambiguity detector (46') is installed downstream of said set of correlators (24; 24') so as to receive said correlation values as input and in which the ambiguity detector (46') is configured so as to decide on the basis of the correlation values whether the first and second time offset signals are in agreement.

5. A device according to any one of claims 2 to 4, comprising a signal-to-noise ratio estimator (45) producing an estimate of the signal-to-noise ratio, in which the ambiguity detector (46; 46') is configured so as to take account of the signal-to-noise ratio estimate in the decision as to whether the first and second time offset signals are in agreement.

6. A device according to any one of claims 1 to 5, in which the spreading waveform tracking loop (26) comprises a subcarrier replica generator (58; 58'), a pseudo-random code replica generator (56; 56') and an oscillator (32), designated code oscillator, supplying a synchronisation signal to the generators of the internal subcarrier replica (58; 58') and the pseudo-random code replica (56; 56'), said code oscillator (32) being driven by said spreading waveform servo signal.

7. A device according to any one of claims 1 to 6 provided with a carrier tracking loop (28) comprising
   an internal carrier replica generator (60; 60') supplying an internal carrier replica to the set of correlators (24; 24');

an oscillator (30), designated carrier oscillator, supplying a synchronisation signal to the internal carrier replica generator (60; 60');

a carrier discriminator (34) connected to the set of correlators (24; 24') and configured to supply to the carrier oscillator (30), as a function of said correlation values, a carrier servo signal governing the phase difference between the carrier and the internal replica of the carrier.

8. A device according to any one of claims 1 to 7, in which said set of correlators (24; 24') comprises an early correlation section, a prompt correlation section and a late correlation section.

9. A device according to any one of claims 1 to 8, in which said discrimination unit (38) is embodied as a processor, said ambiguous discriminator (42), unambiguous discriminator (44) and selection unit (46, 48; 46', 48') being implemented on this processor in the form of a hard wired program or software executable by the processor.

10. A radionavigation signal receiver (18) comprising a device according to any one of claims 1 to 9.

11. A method for tracking an incoming radionavigation signal, said radionavigation signal comprising a carrier modulated by a spreading waveform in turn comprising a subcarrier and a pseudo-random code, said method comprising:

producing correlation values between said incoming radionavigation signal and internal replicas of the radionavigation signal, said internal replicas of the radionavigation signal comprising internal replicas of the spreading waveform with an in-phase and quadrature-phase subcarrier replica;

producing, as a function of said correlation values, a spreading waveform servo signal governing the timing differences between the internal replicas of the spreading waveform and the spreading waveform modulating the radionavigation signal;

**characterised by**

evaluating an ambiguous discriminator, based on a correlation function with a plurality of extremums, to produce, as a function of said correlation values, a first time offset signal;

evaluating an unambiguous discriminator, based on a correlation function with a unique extremum, to produce, as a function of said correlation values, a second time offset signal;

detecting whether the first and second time offset signals are in agreement; and

selecting as said spreading waveform servo signal either the first time offset signal if agreement between the first and second time offset signals is detected, or the second time offset signal if not.

12. A method according to claim 11, in which the spreading waveform tracking loop is used to control a spreading waveform tracking loop (26) comprising a subcarrier replica generator (58; 58'), a pseudo-random code replica generator (56; 56') and an oscillator (32), designated code oscillator, supplying a synchronisation signal to the generators of the internal subcarrier replica (58; 58') and the pseudo-random code replica (56; 56'), said code oscillator (32) being driven by said spreading waveform servo signal.

**Fig. 1**

**Fig. 2**

**Fig. 3**

**Fig. 4**

**Fig. 5**

**Fig. 8**

**Fig. 6**

EP 2 382 484 B1

19

Fig. 7

## RÉFÉRENCES CITÉES DANS LA DESCRIPTION

**Documents brevets cités dans la description**

- FR 2853967

- WO 2008090323 A1

**Littérature non-brevet citée dans la description**

- **A. DE LATOUR ; T. GRELIER ; G. ARTAUD ; L. RIES ; J-L. ISSLER ; V. HEIRIES.** Subcarrier Tracking Performances of BOC, ALTBOC and MBOC Signals. *Meeting Proceedings of the 20th International Technical Meeting of the Satellite Division of the Institute of Navigation ION GNSS 2007,* 25 Septembre 2007